# EUROPEAN PATENT APPLICATION

(11) **EP 2 650 552 A2**
(43) Date of publication of application: **16.10.2013**
(21) Application number: 13163314.1
(22) Date of filing: 11.04.2013
(51) Int. Cl.: F16D 25/0638, F16D 25/12, F16D 48/02

(54) **Hydraulic clutch assembly and method of providing hydraulic fluid to a hydraulic clutch assembly**

(30) Priority: 12.04.2012 US 201213444901
(71) Applicant: Hamilton Sundstrand Corporation, Windsor Locks, CT 06096-1010 (US)
(72) Inventor: Weyl, Raymond N., Rockford, IL Illinois 61108 (US); Long, Charles E., Rockford, IL Illinois 61108 (US)
(74) Representative: Bridge, Kerry Ann

(57) **Abstract**

A hydraulic clutch assembly, 10, includes a plurality of frictional clutch discs, 16, moveable between an engaged condition and a disengaged condition, wherein the engaged condition provides a transfer of rotational energy. Also included is a first toroidal hydraulic chamber, 28, configured to depress the plurality of frictional clutch discs, 16, into the engaged condition. Further included is a second toroidal hydraulic chamber, 40, opposing the first toroidal hydraulic chamber, 28, wherein the second toroidal hydraulic chamber, 40, is configured to balance centrifugal expansion forces of the frst toroidal hydraulic chamber, 28. Yet further included is a lubrication circuit, 24, for supplying a hydraulic fluid from a fluid reservoir, 26, to the second toroidal hydraulic chamber, 40, and the plurality of frictional clutch discs, 16, wherein the second toroidal hydraulic chamber, 40, is substantially filled prior to delivery of the hydraulic fluid to the plurality of frictional clutch discs, 16.

## Description

### BACKGROUND OF THE INVENTION

The present invention relates to hydraulic clutches, and more particularly to hydraulic clutches comprising hydraulic balance chambers, as well as a method of providing hydraulic fluid to hydraulic balance chambers.

High-speed, hydraulically actuated clutches generate large centrifugal pressures. The centrifugal pressure, operating on a clamping piston, generates clamp loads in excess of forces provided by most mechanical springs designed to release a clutch. Therefore, these clamp loads must be overcome to effectively release an applied clutch. Typically, such clutches implement a costly mechanical dump valve to circumvent the clamp loads and allow springs to retract an applied clutch. This results in additional time and fluid necessary to refill a hydraulic clutch application chamber and an associated hydraulic circuit for subsequent clutch application. For clutch assemblies employing multiple hydraulic chambers in an effort to counteract the centrifugal forces generated, hydraulic fluid is directed from a reservoir to the multiple hydraulic chambers, but the order of filling is typically not controlled and one or more of the hydraulic chambers may require a separate and unique filling system.

### BRIEF DESCRIPTION OF THE INVENTION

According to one embodiment, a hydraulic clutch assembly includes a plurality of frictional clutch discs moveable between an engaged condition and a disengaged condition, wherein the engaged condition provides a transfer of rotational energy. Also included is a first toroidal hydraulic chamber configured to depress the plurality of frictional clutch discs into the engaged condition. Further included is a second toroidal hydraulic chamber opposing the first toroidal hydraulic chamber, wherein the second toroidal hydraulic chamber is configured to balance centrifugal expansion forces of the first toroidal hydraulic chamber. Yet further included is a lubrication circuit for supplying a hydraulic fluid from a fluid reservoir to the second toroidal hydraulic chamber and the plurality of frictional clutch discs, wherein the second toroidal hydraulic chamber is substantially filled prior to delivery of the hydraulic fluid to the plurality of frictional clutch discs.

According to another embodiment, a method of providing hydraulic fluid to a hydraulic clutch assembly is provided. The method includes supplying a hydraulic balance chamber and a plurality of frictional clutch discs with a hydraulic fluid, wherein the hydraulic fluid is directed from a fluid reservoir through a lubrication circuit. Also included is directing the hydraulic fluid to the hydraulic balance chamber to a relatively filled state prior to directing the hydraulic fluid to the plurality of frictional clutch discs.

### BRIEF DESCRIPTION OF THE DRAWINGS

The subject matter which is regarded as the invention is particularly pointed out and distinctly claimed in the claims at the conclusion of the specification. The foregoing and other features and advantages of the invention are apparent from the following detailed description taken in conjunction with the accompanying drawings in which:

FIG. 1 is a cross-sectional view of a hydraulic clutch assembly;

FIG. 2 is an enlarged, cross-sectional view of the hydraulic clutch assembly of FIG. 1; and

FIG. 3 is a flow diagram illustrating a method of providing hydraulic fluid to the hydraulic clutch assembly.

### DETAILED DESCRIPTION OF THE INVENTION

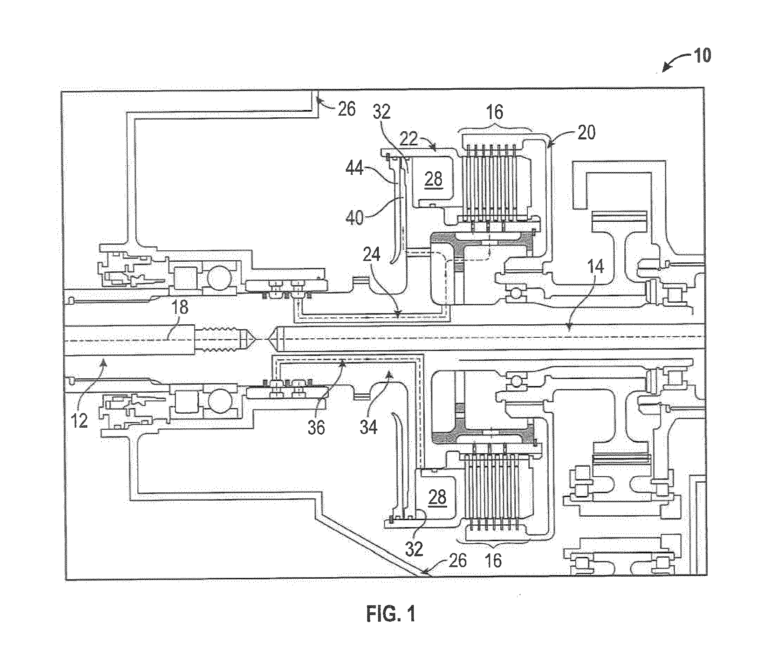

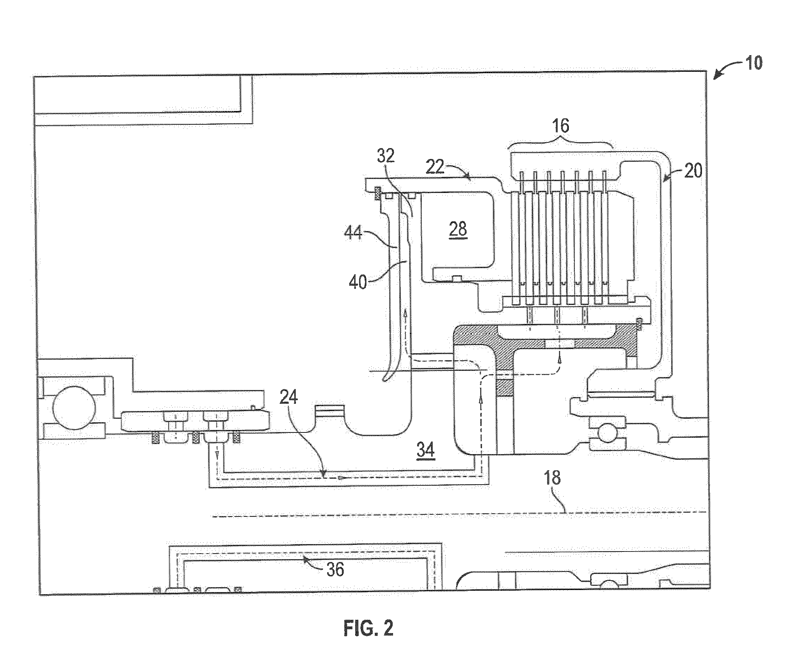

Referring to FIGS. 1 and 2, a hydraulic clutch assembly ("clutch") is illustrated and generally referred to with reference numeral 10. The clutch 10 is configured to engage or disengage rotational torque provided from an input portion 12 to an output portion 14 and transfers rotational energy from the input portion 12 to the output portion 14 through a plurality of clutch discs 16. The clutch 10 includes an axis of rotation 18 and a first hub 20 arranged about a second hub 22. Each of the first hub 20 and the second hub 22 may be rotationally symmetric about the axis of rotation 18.

The second hub 22 may be configured to depress the plurality of clutch discs 16 arranged within the first hub 20 so as to engage the clutch 10, resulting in an engaged condition. The clutch 10 may include a plurality of hydraulic circuits arranged therein to enable depressing the plurality of clutch discs 16. The plurality of clutch discs 16 may be annular, frictional clutch discs of any suitable material and form. The plurality of clutch discs 16 may be wet clutch discs configured to receive oil or fluid for cooling through a lubrication circuit 24 supplied from a fluid reservoir 26, where the lubrication circuit 24 is disposed within the clutch 10.

The clutch 10 includes a first toroidal hydraulic chamber ("application chamber") 28 within the second hub 22, and that is defined by interior space of the second hub 22 and a first annular wall 32. The first annular wall 32 is a protrusion from a main body 34 of the clutch 10, and provides support for the second hub 22. The clutch 10 further includes a clutch application fluid circuit 36 in fluid communication with the application chamber 28. The clutch application fluid circuit 36 may transfer hydraulic fluid through the main body 34 to fill the application chamber 28. Upon receiving hydraulic fluid, increase in pressure within the application chamber 28 causes the second hub 22 to slide upon the first annular wall 32, thereby depressing the plurality of clutch discs 16 against the interior of the first hub 20. Thus, a combination of the clutch application fluid circuit 36 and the application chamber 28 allows application of the clutch 10 and produces the engaged condition.

It is to be appreciated that as the clutch 10 rotates, hydrostatic pressure builds within the application chamber 28, thereby increasing expansive forces within the application chamber 28 which would otherwise increase the force applied on the plurality of clutch discs 16 and increase a required force to disengage the clutch 10. However, in order to balance and mitigate negative effects from rotation, an opposing balance chamber 40 is provided.

The balance chamber 40 is a second toroidal hydraulic chamber within the second hub 22 and is defined by interior space of the second hub 22, the first annular wall 32 and a second annular wall 44. The second annular wall 44 is fixedly attached to the second hub 22 and the balance chamber 40 is configured to slide upon the second annular wall 44. The balance chamber 40 is configured to receive hydraulic fluid through the lubrication circuit 24 from the fluid reservoir 26, as is the case with the plurality of clutch discs 16. In order to ensure that the balance chamber 40 fills first, the hydraulic fluid is directed to the balance chamber 40 immediately upon operation of the clutch 10 (i.e., when a gearbox is started). Once the balance chamber 40 is substantially full, the lubrication circuit 24 directs hydraulic fluid to the plurality of clutch discs 16. This alleviates the need for a separate fluid circuit and ensures failure of the clutch 10 in a disengaged condition. Upon receiving the hydraulic fluid, an increase in pressure within the balance chamber 40 restricts the expansive forces of the balance chamber 40, thereby serving to mechanically "balance" the hydraulic system.

For example, as the clutch 10 rotates, hydrostatic pressure building within the application chamber 28 is mitigated through hydrostatic pressure building within the balance chamber 40, which produces expansive forces against the second annular wall 44. Therefore, overall forces between the second annular wall 44 and the second hub 22 are balanced. It should be appreciated that a relative size and radial position of each of the application chamber 28 and the balance chamber 40 determine an overall balance to centrifugal forces within the clutch 10. Further, a central axis of the main body 38 is co-linear with the central axis 18 of the first hub 20 and the second hub 22.

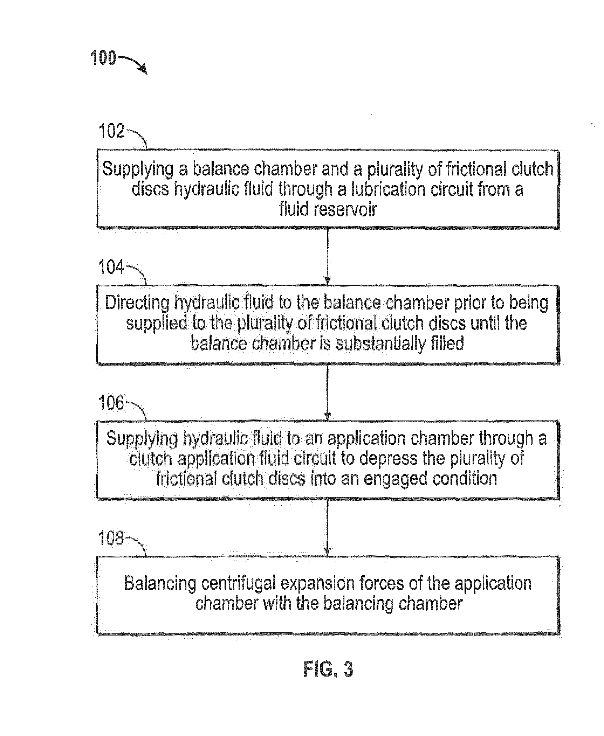

Referring now to FIG. 3, a method of providing hydraulic fluid 100 to the hydraulic clutch assembly ("clutch") 10 is also provided. The clutch 10 has been previously described and specific structural components need not be described in further detail. The method 100 includes supplying 102 hydraulic fluid from the fluid reservoir 26 to the balance chamber 40 and the plurality of frictional clutch discs 16 through the lubrication circuit 24, where the hydraulic fluid is directed 104 to the balance chamber 40 prior to being supplied to the plurality of frictional clutch discs 16 until the balance chamber 40 is substantially filled. The application chamber 28 is supplied 106 with hydraulic fluid through the clutch application fluid circuit 36 in order to depress the plurality of frictional clutch discs 16 into an engaged condition. The balancing chamber 40 balances 108 centrifugal expansion forces of the application chamber 28.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while the various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A hydraulic clutch assembly (10) comprising:
a plurality of frictional clutch discs (16) moveable between an engaged condition and a disengaged condition, wherein the engaged condition provides a transfer of rotational energy;
a first toroidal hydraulic chamber (28) configured to depress the plurality of frictional clutch discs (16) into the engaged condition;
a second toroidal hydraulic chamber (40) opposing the first toroidal hydraulic chamber (28), wherein the second toroidal hydraulic chamber (40) is configured to balance centrifugal expansion forces of the first toroidal hydraulic chamber (28); and
a lubrication circuit (24) for supplying a hydraulic fluid from a fluid reservoir (26) to the second toroidal hydraulic chamber (28) and the plurality of frictional clutch discs (16), wherein the second toroidal hydraulic chamber (40) is substantially filled prior to delivery of the hydraulic fluid to the plurality of frictional clutch discs (16).

2. The hydraulic clutch assembly of claim 1, further comprising a clutch application fluid circuit (36) in fluid communication with the first toroidal hydraulic chamber (28).

3. The hydraulic clutch assembly of claim 2, further comprising a first hub (20), the plurality of frictional clutch discs (16) arranged therein.

4. The hydraulic clutch assembly of claim 3, wherein the plurality of frictional clutch discs (16) are wet clutch discs.

5. The hydraulic clutch assembly of claim 3, further comprising a second hub (22), wherein the first toroidal hydraulic chamber (28) and the second toroidal hydraulic chamber (40) are disposed therein.

6. The hydraulic clutch assembly of claim 5, wherein the engaged condition occurs in response to filling of the first toroidal hydraulic chamber (28) with the hydraulic fluid from the clutch application fluid circuit (36).

7. The hydraulic clutch assembly of claim 6, further comprising a main body arranged within the second hub (22) and configured to rotate the second hub (22), wherein a central axis of the main body is co-linear with a central axis of the first hub (20) and a central axis of the second hub (22).

8. A method of providing hydraulic fluid to a hydraulic clutch assembly (10) comprising:
supplying a hydraulic balance chamber (40) and a plurality of frictional clutch discs (16) with a hydraulic fluid, wherein the hydraulic fluid is directed from a fluid reservoir (26) through a lubrication circuit (24); and
directing the hydraulic fluid to the hydraulic balance chamber (40) to a relatively filled state prior to directing the hydraulic fluid to the plurality of frictional clutch discs (16).

9. The method of claim 8, further comprising supplying a hydraulic application chamber (28) with a hydraulic fluid, wherein the hydraulic fluid is directed through a clutch application fluid circuit (36) disposed within the hydraulic clutch assembly (10).

10. The method of claim 9, further comprising depressing the plurality of frictional clutch discs (16) into an engaged condition upon filling of the hydraulic application chamber (28) with hydraulic fluid, wherein the engaged condition provides a transfer of rotational energy from an input portion (12) to an output portion (14).

11. The method of claim 10, further comprising balancing centrifugal expansion forces of the hydraulic application chamber (28) with the hydraulic balance chamber (40), wherein the hydraulic balance chamber (40) is configured to oppose the hydraulic application chamber (28) when the hydraulic balance chamber is substantially filled with the hydraulic fluid.
